# EUROPEAN PATENT SPECIFICATION

(11) **EP 0 873 369 B1**
(45) Date of publication and mention of the grant of the patent: **18.09.2002**
(21) Application number: 96945115.2
(22) Date of filing: 30.12.1996
(51) Int. Cl.: C08G 18/10, C09J 175/04, C08G 18/12, C08G 18/40

(54) **ONE-PART CURABLE POLYURETHANE ADHESIVE**
HÄRTBARE EINKOMPONENTENPOLYURETHANKLEBSTOFFE
ADHESIF A BASE DE POLYURETHANNE DURCISSABLE A MONOCOMPOSANT

(30) Priority: 11.01.1996 US 585143; 11.01.1996 US 585223
(43) Date of publication of application: 28.10.1998
(73) Proprietor: ESSEX SPECIALTY PRODUCTS, INC., Auburn Hills, MI 48326 (US); THE DOW CHEMICAL COMPANY, Midland, Michigan 48674 (US)
(72) Inventor: BHAT, Shailesh, S., Sterling Heights, Michigan 48310 (US); RIZK, Sidky, D., Westfield, NJ 07090 (US); HOFFMAN, Dwight, K., Midland, MI 48640 (US)
(74) Representative: Raynor, John
(86) International application number: US9620816
(87) International publication number: WO97025360

(56) References cited:
- EP-A- 0 264 675
- EP-A- 0 275 908
- WO-A-94/09046
- WO-A-96/21688
- US-A- 3 707 521
- US-A- 4 118 376
- US-A- 4 687 533
- US-A- 4 780 520
- US-A- 5 143 987

## Description

This application relates to a one-part polyurethane based adhesive useful in bonding porous and nonporous materials. The adhesive is especially useful in bonding glass into window frames, for example, windshields into automobiles.

Polyurethane adhesive compositions typically comprise at least one urethane prepolymer. Adhesives useful for bonding to nonporous substrates, such as glass to metal, are well-known. When glass is installed in automobiles on a production line, a one-part moisture curable polyurethane adhesive is preferably used, as the equipment needed for the application of such an adhesive in an automobile assembly plant is less expensive than the equipment needed to apply a two-part adhesive. One-part polyurethane adhesives are disclosed in US-A-4,374,237 and US-A-4,687,533. US-A-3,707,521 and US-A-4,780,520 disclose one part polyurethane adhesives used in the automotive OEM market for bonding window glass into automobiles.

WO-A-96/21688 discloses a two-part adhesive composition which comprises a polyurethane prepolymer having isocyanate reactive moieties in one-part and a second part which comprises a curative composition which further comprises a polyurea comprising a reaction product of a polyamine and a polyisocyanate dispersed as a polyether polyol based polyurethane prepolymer having reactive hydroxyl moieties, a compound having at least one oxozolidene moiety and a catalyst capable of catalyzing the reaction of the isocyanate and hydroxyl moieties in the presence of moisture. This two-part adhesive provides a reasonable drive away time for replacement glass to bond to automobile. Drive away times are preferably 60 minutes and more preferably 30 minutes from application of the adhesive.

US-A-4,118,376 and US-A-5,015,321 (equivalent to EP-A-0275908) disclose moisture cured adhesives which contains dispersions in the polyurethane prepolymer and which may be cured with oxazolidines.

In the automotive after market replacement industry, glass is often bound into automobiles through the use of two-part moisture curable polyurethane adhesives. Two-part polyurethane adhesives are used because they offer rapid initial cure allowing for rapid drive-away times. Two-part adhesives require special applicators which mix the two parts in specific proportions immediately prior to application. These applicators are more difficult and costly to use than applicators used for one-part adhesives. Further, the improper application or mixing of two-part adhesives can result in poor adhesion. Two-part polyurethane adhesives are well-known, US-A-4,835,012 and DE-A-4,210,277.

In addition, the market demands simpler application systems and faster curing adhesives which allow even faster drive-away times. If the adhesive cures too rapidly, then the window installer loses the necessary time to install and properly place the glass into the frame before the adhesive becomes too intractable to work with. Working time is defined as the period from application of adhesive until the adhesive becomes too intractable to work with.

Future regulations in the U.S. require dual airbags in vehicles. During crashes the airbags inflate and exert additional pressure on the windshield. Federal Transportation Agency regulations require that windshields remain in place at crashes of up to 30 mph (48 KPH). This requires adhesives which have enhanced strength at the drive-away time. To meet such a standard, the lap shear strengths of the adhesive should be preferably 150 psi (1033 kPa) or greater as determined according to ASTM D-3163 and demonstrate impact energy strength of 9 ft-lbs (12.2 Joules) or greater at the designated drive-away time.

Therefore, what is needed is a one-part polyurethane adhesive which facilitates faster drive-away time, which meets the strength and impact requirements defined above and which still provides for a reasonable working time to facilitate proper placement of glass in window frames. What is also needed is a one-part system which meets these requirements so that the disadvantages of the two-part systems can be avoided.

In one embodiment the invention is a polyurethane prepolymer comprising the reaction product of
A) one or more polyisocyanate;
B) one or more compounds containing on average more than one isocyanate reactive compound; and
C) a dispersion triol containing from 10 to 60 percent by weight based on the dispersion of particles of an organic polymer which is nonreactive with the isocyanate reactive compounds and the polyisocyanates having a particle size of from 5 to 50 microns;
wherein the prepolymer has a free isocyanate content of from 0.8 to 2.2 percent by weight.

In another embodiment the invention is a one-part adhesive composition comprising:
A)
   i) an isocyanate functional polyurethane prepolymer having a free isocyanate content of from 0.8 to 2.2 percent by weight and particles comprising a curing agent for an isocyanate functional polyurethane prepolymer encapsulated within a coating material; or
   ii) a prepolymer comprising the reaction product of one or more polyisocyanate; one or more compounds containing on average more than one isocyanate reactive compound; and a dispersion triol containing from 10 to 60 percent by weight based on the dispersion of particles of an organic polymer which is nonreactive with the isocyanate reactive compounds and the polyisocyanates having a particle size of from 5 to 50 microns; wherein the prepolymer has a free isocyanate content of from 0.8 to 2.2 percent by weight; and
B) a catalyst capable of catalyzing the reaction of isocyanate moieties with isocyanate reactive moieties.

In yet another embodiment the invention is a process for binding two substrates together which comprises contacting an adhesive composition of the invention with at least one of the substrates and contacting the substrates together along the portion of the substrate(s) to which the adhesive has been applied before the adhesive applied cures and allowing the adhesive to cure and bond the substrates together.

In another embodiment the invention is a process for bonding two substrates together which comprises rupturing the encapsulated curing agent particles so as to contact the curing agent with the prepolymer in the adhesive composition, contacting the adhesive composition of the invention with at least one of the substrates and contacting the substrates together along the portion of the substrate(s) to which the adhesive has been applied before the adhesive applied cures and allowing the adhesive to cure and bond the substrates together.

The prepolymers of this invention facilitate the preparation of adhesives which solve the problems presented the skilled artisan. The adhesives of this invention provides reasonable drive-away times for replacement glass it bonds into automobiles. Such drive-away times are preferably 60 minutes and more preferably 30 minutes from application of the adhesive. The adhesive of the invention also provides reasonable working times, preferably 6 to 15 minutes, and more preferably 10 to 12 minutes. Additionally, the lap shear strengths and the impact energy strengths of the adhesive at the drive away time are preferably 150 psi (1033 kPa) or greater and more preferably 250 psi (1723 kPa) or greater according to ASTM D-3163 and 9.0 ft-lbs (12.2 Joules) or greater, respectively. Additionally, many of the problems associated with two-part adhesives described before are eliminated.

The urethane prepolymers useful in the invention have an average isocyanate functionality sufficient to allow the preparation of a crosslinked polyurethane upon cure and not so high that the prepolymers are unstable. Stability in this context means that the prepolymer or adhesive prepared from the prepolymer has a shelf life of at least 6 months at ambient temperatures, in that it does not demonstrate an increase in viscosity during such period which prevents its application or use. Preferably the prepolymer or adhesive prepared therefrom does not undergo an increase in viscosity of more than 50 percent during the stated period. Preferably the average isocyanate functionality is at least 2.2 and preferably at least 2.4. Below 2.2, the ability of the prepolymer to crosslink sufficiently to achieve the desired strength of the cured adhesive is compromised. Preferably the average isocyanate functionality of the prepolymer is 3.0 or less and more preferably 2.8 or less. Above 3.0 average isocyanate functionality the prepolymer and adhesives prepared from the prepolymer may exhibit unacceptable stability. The prepolymer preferably has a free isocyanate content which facilitates acceptable strength in adhesives prepared from the prepolymers after 60 minutes and stability of the prepolymer. Preferably the free isocyanate content is 0.8 percent by weight or greater based on the weight of the prepolymer, more preferably 1.0 percent by weight or greater, even more preferably 1.2 percent by weight or greater and most preferably 1.4 percent by weight or greater, and preferably 2.2 percent by weight or less, even more preferably 2.1 percent by weight or less and most preferably 1.8 percent by weight or less. Above 2.2 percent by weight the adhesives prepared from the prepolymer may demonstrate lap shear strengths after 60 minutes which are too low for the intended use and foaming during cure of the adhesive prepared from the prepolymer may occur. Below 0.8 percent by weight the prepolymer may exhibit instability, for instance by gelling within 3 days. Preferably the weight average molecular weight of the prepolymer is 3,000 or greater, more preferably 4,000 or greater, even more preferably 5,000 or greater and most preferably 6,000 or greater; and is preferably 20,000 or less, more preferably 15,000 or less, even more preferably 10,000 or less and most preferably 8,000 or less. The prepolymer preferably exhibits a viscosity which facilitates formulation of a pumpable adhesive which has good green strength. Preferably the viscosity of the prepolymer is 20,000 or less and more preferably 13,000 or less, preferably 3,000 centipoise or greater, and more preferably 6,000 centipoise or greater and most preferably 8,000 centipoise or greater. The viscosity of the adhesive can be adjusted with fillers although the fillers cannot improve the green strength of the final adhesive. Below 3,000 centipoise the adhesive prepared from the prepolymer may exhibit poor green strength. Above 20,000 the prepolymer may be unstable and subject to gelling. The prepolymer may be prepared by any suitable method, such as by reacting one or more compounds or polymers containing on average more than one, and preferably at least two, isocyanate-reactive groups with an excess over stoichiometry of a polyisocyanate under reaction conditions sufficient to form a prepolymer having isocyanate functionality and free isocyanate content which meets the criteria discussed above.

Preferable polyisocyanates for use in preparing the prepolymer include any aliphatic, cycloaliphatic, arylaliphatic, heterocyclic or aromatic polyisocyanate, or mixture thereof, with an average isocyanate functionality of at least 2.0 and an equivalent weight of at least 80. Preferably the isocyanate functionality of the polyisocyanate is at least 2.0, more preferably at least 2.2, and is most preferably at least 2.3; and is preferably no greater than 4.0, more preferably no greater than 3.5, and is most preferably no greater than 3.0. Higher functionalities may also be used, but their use may cause excessive crosslinking, result in an adhesive which is too viscous to handle and apply easily, can cause the cured adhesive to be too brittle and cause foaming due to carbon dioxide gassing. Preferably the equivalent weight of the polyisocyanate is at least 100, more preferably at least 110, and is most preferably at least 120; and is preferably no greater than 300, more preferably no greater than 250, and is most preferably no greater than 200.

Examples of such polyisocyanates include those disclosed in WO 96/21688, see page 3 lines 7 to 36, published 18 July 1996. Preferably the polyisocyanate is an aromatic or cycloaliphatic polyisocyanate such as diphenylmethane-4,4'-diisocyanate, isophorone diisocyanate, tetramethylxylene diisocyanate, and is most preferably diphenylmethane-4,4'-diisocyanate.

The polyisocyanates are used in sufficient amount to form an advanced polyurethane prepolymer having free reactive isocyanate moieties. Preferably the amount of polyisocyanate is 5 percent by weight or greater based on the starting materials and more preferably 9 percent by weight or greater and preferably 20 percent by weight or less, more preferably 15 percent by weight or less and most preferably 11 percent by weight or less.

The term "isocyanate-reactive compound" as used herein includes water and any organic compound having on average more than one and preferably at least two, and preferably no more than 4, isocyanate-reactive moieties, such as a compound containing an active hydrogen moiety or an imino-functional compound and is described in WO 96/21688 published 18 July 1996, see page 3 line 37 to page 4 line 9.

Preferable isocyanate-reactive compounds are polyols. The term polyol as used herein includes any organic compound having on average more than one and preferably at least two, and preferably no more than four, isocyanate-reactive hydroxyl moieties. Preferable polyols useful in the preparation of the prepolymers include, for example, polyether polyols, polyester polyols, poly(alkylene carbonate)polyols, hydroxyl-containing polythioethers, polymer polyols, and mixtures thereof. Preferably polyether polyols useful in the invention are disclosed in WO 96/21688 published 18 July 1996, see page 4 line 11 to 26.

Polyester polyols are also well-known in the art and may be prepared by reacting a polycarboxylic acid or anhydride thereof with a polyhydric alcohol. Examples of preferable polycarboxylic acids include those described in WO 96/21688 published 18 July 1996, see page 4 line 29 to 37.

Preferable polymer polyols include dispersions of polymers of vinyl monomers in a continuous polyol phase, particularly dispersions of styrene/acrylonitrile copolymers. Also useful are the so-called polyisocyanate polyaddition (PIPA) polyols (dispersions of polyurea-polyurethane particles in a polyol) and the polyurea dispersions in polyols (PHD polyols). Copolymer polyols of the vinyl type are described, for example, in U.S. Patents 4,390,645, 4,463,107, 4,148,840 and 4,574,137.

Preferably the polyol(s) have an average functionality of at least 1.5, more preferably at least 1.8 and most preferably at least 2.0; and is preferably no greater than 4.0, more preferably no greater than 3.5 and most preferably no greater than 3.0. Preferably the equivalent weight of the polyol(s) is at least 200, more preferably at least 500 and most preferably at least 1,000; and is preferably no greater than 3,500, more preferably no greater than 3,000 and most preferably no greater than 2,500.

Preferably the polyol is a mixture of one or more diols and one or more triols. Preferably the one or more polyols are polyether polyols and more preferably polyoxyalkylene oxide polyols. Most preferred, however, are ethylene oxide-capped polypropylene oxide-based polyols, for example, those prepared by reacting glycerine with propylene oxide, followed by reacting the product with ethylene oxide.

The polyols are present in an amount sufficient to react with most of the isocyanate groups of the isocyanates leaving enough isocyanate groups to correspond with the desired free isocyanate content of the prepolymer. Preferably the polyols are present in an amount of 25 percent by weight or greater based on the prepolymer, more preferably 42 percent by weight or greater and most preferably 48 percent by weight or greater. Preferably the polyols are present in an amount of 70 percent by weight or less based on the prepolymer, more preferably 58 percent by weight or less and most preferably 52 percent by weight or less. In the embodiment where the polyols comprise a mixture of diols and triols, the amount of diols present is preferably 10 percent by weight or greater based on the prepolymer, more preferably 17 percent by weight or greater and most preferably 19 percent by weight or greater; and 30 percent by weight or less based on the prepolymer, more preferably 23 percent by weight or less and most preferably 21 percent by weight or less. In the embodiment where the polyols comprise a mixture of diols and triols, the amount of triols present is preferably 15 percent by weight or greater based on the prepolymer, more preferably 25 percent by weight or greater and most preferably 28 percent by weight or greater; and preferably 40 percent by weight or less based on the prepolymer, more preferably 35 percent by weight or less and most preferably 32 percent by weight or less. The proportion of diol to triol is chosen to achieve the desired isocyanate functionality of the prepolymer.

In one preferred embodiment the triol can be a dispersion triol having dispersed therein particles of an organic based polymer. The organic based polymer particles are chosen so as to not be reactive with the isocyanate-reactive moieties or isocyanate moieties of the isocyanates. Preferably the particles comprise a thermoplastic polymer, rubber modified thermoplastic polymer or a polyurea, dispersed in a triol. The polyureas useful preferably comprise the reaction product of a polyamine and a polyisocyanate. Preferable thermoplastic polymers are those based on monovinylidene aromatic monomers and copolymers of monovinylidene aromatic monomers with conjugated dienes, acrylates, methacrylates and/or unsaturated nitriles. The copolymer can be a block or random copolymer. More preferably the particles dispersed in the triol comprise copolymers of unsaturated nitriles, conjugated dienes and a monovinylidene aromatic compound; a copolymer of an unsaturated nitrile and a monovinylidene aromatic monomer or a polyurea. Even more preferably the particles comprise a polyurea or polystyrene-acrylonitrile copolymer with the polystyrene-acrylonitrile copolymers being most preferred.

Representative monovinylidene aromatic compounds which can be employed herein include styrene, alkyl-substituted styrenes (for example, alpha-methylstyrene and alpha-ethylstyrene) and ring-substituted styrenes (for example, vinyl toluene, particularly para-vinyltoluene, ortho-ethylstyrene and 2,4-dimethylstyrene); ring-substituted halogenated styrenes such as chlorostyrene and 2,4-dichlorostyrene; styrenes substituted with both a halo and an alkyl group such as 2-chloro-4-methylstyrene and vinylanthracene. In general, the preferred monovinylidene aromatic compound(s) employed in preparing the styrenic polymer resin is styrene or a combination of styrene and alpha-methylstyrene (advantageously such combinations contain alpha-methylstyrene in amounts from 10 to 50, more advantageously from 15 to 40, weight percent of the total weight of the styrene and alpha-methylstyrene); with styrene being the most preferred monovinylidene aromatic compound.

Preferred unsaturated nitriles useful herein include acrylonitrile, ethacrylonitrile, methacrylonitrile and mixtures thereof, more preferred is acrylonitrile. In preparing copolymers useful in this invention, the amount of the unsaturated nitrile(s) most advantageously employed will vary depending on the physical and chemical properties desired in the copolymer particles. The copolymer will advantageously be derived from 5 to 35, preferably from 15 to 25, weight percent of the unsaturated nitrile(s) wherein said weight percent is based on the total weight of the polymer.

Conjugated dienes useful in the block copolymer include straight- and branched-chain aliphatic hydrocarbons containing two double bonds attached to adjacent carbon atoms. Preferred dienes contain 4 to 6 carbon atoms and include butadiene, isoprene, 1,3-pentadiene, 1,3-hexadiene, 2,3-dimethylbutadiene and mixtures thereof. More Preferably such conjugated dienes contain from 4 to 5 carbon atoms and include, for example, butadiene, isoprene, cis-1,3-pentadiene, trans-1,3-pentadiene and mixtures thereof. The most preferred dienes are butadiene and isoprene.

To prepare the copolymers based on styrene and optionally other unsaturated compounds, mass or a combination of mass/suspension polymerization techniques are most commonly employed. Illustrative mass polymerization techniques are described in U.S. Patents 2,727,884 and 4,782,127,. Processes for the preparation of block copolymers of monovinylidene aromatic comonomers and conjugated dienes are described in U.S. Patents 5,242,984 and U 5,134,968.

In one embodiment the thermoplastic polymer particles may be rubber modified. Generally this involves blending an elastomeric or rubbery polymer with the thermoplastic polymer. A preferred rubbery material is acrylonitrile-butadiene-styrene interpolymer. Preferably the rubber modified thermoplastic polymer particles contain 15 to 25 percent by weight of rubber polymer.

Preferably the triol is a polyether triol, more preferably a polyoxyalkylene based triol and most Preferably the triol comprises a polyoxypropylene chain with a polyoxyethylene end cap. A particularly preferred polyether triol is a 1,2,3-propane triol initiated polyoxypropylene with a polyoxyethylene end cap. Preferably such triol has molecular weight of 4,000 or greater, more preferably 5,000 or greater and most preferably 6,000 or greater. Preferably such triol has a molecular weight of 8,000 or less and more preferably 7,000 or less. Below 4,000 molecular weight the elongation and impact properties of the finally cured adhesive may be too low for the intended use. Above 8,000 molecular weight the adhesive prepared from the prepolymer may be too elastomeric for the intended use. The triol preferably has a hydroxyl number which is high enough such that the adhesive prepared from the prepolymer cures rapidly enough and provides the desired open times. If the hydroxyl number is too low the adhesive cures too slowly and the desired open times and drive away times cannot be achieved. The hydroxyl number should not be so high as to reduce the elongation of the cured adhesive prepared from the prepolymer. Preferably the hydroxyl number of the triol is 15 or greater, more preferably 20 or greater, even more preferably 30 or greater and most preferably 40 or greater. Preferably the hydroxyl number of the triol is 75 or less and more preferably 60 or less.

The organic polymer particles dispersed in the triol preferably have a particle size which is large enough to improve the impact properties and elastomeric properties of the finally cured adhesive, but not so large so as to reduce the ultimate strength of the adhesive after 60 minutes of cure. Preferably the particle size is 10 microns or greater and more preferably the particle size is 20 microns or greater. Preferably the particle size is 50 microns or less and more preferably the particle size is 40 microns or less. The triol dispersion contains a sufficient amount of organic polymer particles such that the adhesive, upon cure, has sufficient hardness for the desired use and not so much such that the cured adhesive has too much elasticity as defined by elongation. Preferably the dispersion contains 20 percent by weight or greater of organic polymer particles based on the dispersion, preferably 30 percent by weight or greater and more preferably 35 percent by weight or greater. Preferably the dispersion contains 60 percent by weight or less of organic polymer particles based on the dispersion, preferably 50 percent by weight or less and more preferably 45 percent by weight or less.

If present, the dispersion of organic polymer particles in a triol is present in the prepolymer in an amount of 9 percent by weight or greater of the prepolymer and more preferably 10 percent by weight or greater, and 18 percent by weight or less of the prepolymer and more preferably 12 percent by weight or less.

In one embodiment the organic polymer particles comprise a polyurea, comprising the reaction product of a polyamine and a polyisocyanate. The polyurea preferably does not react with isocyanate reactive moieties or isocyanate moieties. Preferably the polyurea is prepared by the reaction of a polyamine, preferably a diamine, with a polyisocyanate, preferably a diisocyanate. The polyisocyanate and polyamine are mixed and undergo immediate reaction at room temperature. Thereafter the polyurea is contacted with triols, preferably under high shear conditions to disperse the polyurea into the triol. Preferably the isocyanate used to prepare the polyurea is a cycloaliphatic or aliphatic polyisocyanate, as the use of cycloaliphatic and aliphatic isocyanates facilitate handling and stability of the polyurea. Preferably the polyurea has a urea functionality of 8 percent or greater, more preferably 10 percent or greater and most preferably 15 percent or greater. Preferably the polyurea has a functionality of 40 percent or less and more preferably 20 percent or less. Functionality as used herein relative to polyureas refers to weight percent of urea groups present in the polyurea.

The polyurethane prepolymers of the invention may further comprise a plasticizer. The plasticizers useful in the prepolymer are common plasticizers useful in polyurethane adhesive applications and well known to those skilled in the art. The plasticizer is present in an amount sufficient to disperse the prepolymer in the final adhesive composition. The plasticizer can be added to the adhesive either during preparation of the prepolymer or during compounding of the adhesive composition. Preferably the plasticizer is present in 1 percent by weight or greater of the prepolymer formulation (prepolymer plus plasticizer), more preferably 18 percent by weight or greater and most preferably 22 percent by weight or greater. Preferably the plasticizer is present in an amount of 32 percent by weight or less of the prepolymer formulation and more preferably 25 percent by weight or less.

The polyurethane prepolymer may be prepared by any suitable method, such as bulk polymerization and solution polymerization. The reaction to prepare the prepolymer is carried out under anhydrous conditions, preferably under an inert atmosphere such as a nitrogen blanket, to prevent crosslinking of the isocyanate groups by atmospheric moisture. The polyurethane prepolymer is preferably prepared by contacting the compound or polymers housing the isocyanate-reactive moieties in the absence of a catalyst and heating the mixture to 45°C or greater, more preferably 48°C or greater. The mixture is heated to a temperature of 55°C or less, more preferably 49°C or less. The polyisocyanate is then added to the mixture and the mixture is subjected to mixing so as to evenly disperse the polyisocyanate in the reaction mixture. Thereafter the polyurethane catalyst is added. After addition of the catalyst, an exotherm generally results, preferably the exotherm peak is 58°C or greater and more preferably 60°C or greater. Preferably the exotherm peak is 70°C or less more preferably 65°C or less. Above 70°C, the reaction mixture gels. Thereafter, plasticizer may be added after the exotherm recedes, that is, the temperature drops, to dilute the reactants and quench the reaction. The reaction should be run such that all free isocyanate-reactive moieties are reacted with isocyanate moieties. The reaction mixture preferably contains a standard polyurethane catalyst such as disclosed in WO 94/09046, published 28 April 1994, see page 6 line 30 to 34. The amount of catalyst employed is generally between 0.005 and 5 percent by weight of the mixture catalyzed, depending on the nature of the isocyanate. The relative ratio of isocyanate groups to isocyanate-reactive groups should be such that the resulting prepolymer has no free isocyanate-reactive groups as such groups will react prematurely. Preferably the ratio of isocyanate groups to isocyanate-reactive groups is such that a reasonable advancement occurs. Preferably the equivalent ratio of isocyanate groups to isocyanate-reactive groups is 1.2 or greater and more preferably 1.4 or greater. The equivalent ratio should not be so low so as to prevent complete reaction of the isocyanate-reactive moieties. Preferably the equivalent ratio of isocyanate groups to the isocyanate-reactive groups is 2.0 or less and most preferably 1.6 or less.

In one embodiment, the adhesive composition contains particles comprising a curing agent for an isocyanate-functional polyurethane prepolymer encapsulated within a coating material. The particles function as a latent curing system. When the curing agents are released from the coating material, the curing agents function to speed the cure of the adhesive so that the desired properties are achieved. The particles should be of a size that can be ruptured to release the curing agent and not so large such that the residual coating material remaining in the adhesive interferes with the adhesive or cohesive strength of the cured adhesive. The average particle size of the particles is preferably 10 microns or greater, more preferably 700 microns or greater and most preferably 1000 microns or greater. The average particle size of the particles is preferably 2100 microns or less, more preferably 1400 microns or less and most preferably 1200 microns or less.

The particles contain a curing agent for polyisocyanate-functional polyurethane prepolymers. Any material which can cure such prepolymers may be used as the curing agent, such materials are isocyanate-reactive materials as defined hereinbefore. Preferably the isocyanate-reactive compound useful as a curing agent is a polyol, water, a latent crosslinking material containing at least one oxazolidine moiety or a mixture thereof. Preferred curing agents are small chain polyols, such as those commonly used as initiators for polyether polyols as described hereinbefore, water, a latent crosslinking material containing at least one oxazolidine moiety or mixtures thereof. Examples of latent crosslinking materials include those described in U.S. Patents 4,396,681; 3,743,626; 4,118,376; 4,192,937; and 5,235,062. In one embodiment, such latent crosslinkers comprise bisoxazolidines which are the reaction product of a diisocyanate with a hydroxy alkyl-substituted oxazolidone such as an N-hydroxyethyl oxazolidone. The preferred isocyanates are cycloaliphatic and aliphatic isocyanates such as hexamethylene diisocyanate. A preferred oxazolidone-containing compound is commercially available from Mobay as Hardener OZ which is carbamic acid, 1,6-hexanediyl bis-, bis(2-(2-(1-methylethyl)-3-oxazolidinyl)ethyl) ester. More preferably the curing agent is water, diethylene glycol, butane diol, a bisoxazolidine such as Hardener OZ or mixtures thereof.

The coating material is insoluble with respect to the curing agent, and preferably the prepolymer, and preferably has a melting point in the range of 40°C to 200°C. The coating material is more preferably a petroleum-derived alkane hydrocarbon wax; a polyethylene wax, a polyethylene-alkene copolymer, an oxidized hydrocarbon wax containing hydroxyl or carboxyl groups, a polyester, a polyamide, or a combination thereof. Most Preferably the coating material is a petroleum-derived alkane hydrocarbon wax, a polyethylene-alkene copolymer, or a polyethylene wax or a combination thereof. Preferred polyethylene waxes preferably have a weight average molecular weight in the range of from 500, more preferably from 1000 to 3000, most preferably 2000 Daltons. These waxes are exemplified by Polywax™ 500, Polywax™ 1000, and Polywax™ 2000, or blends thereof, more preferably a 75:25 blend of Polywax™ 1000 and Polywax™ 2000. (Polywax is a Trademark of Petrolite Corporation.)

The curing agent may be encapsulated using the apparatus disclosed in U.S. Patent 3,389,194. The curing agent is pumped through the center tube and the coating material is pumped through the annulus of the nozzle so as to extrude a fluid rod of curing agent encased in a shell of coating material in a carrier fluid. Subsequently, the rod is broken into individual particles. The particles are transported along a carrier duct to harden the coating material. The particles are collected on a screen. The preferred carrier fluid for the coating material is water. The temperature of the coating material and carrier fluid should be chosen such that the coating material formulation is pumpable and extrudable. During cooling, particles are contacted with a cool fluid, such as water, which is at a temperature at which the coating material solidifies. The coating material may be separately heated, preferably to a temperature at which it is liquid, before contacting it with the carrier fluid.

Alternatively, the particles may be prepared by the following procedure: a) dispersing the curing agent in the coating material at a temperature sufficient to melt the coating material; b) forming droplets of curing agent interspersed with the coating material and c) cooling the droplets to solidify the coating material. Optionally, the process may further comprise d) contacting the droplets with a solvent that dissolves the curing agent but does not dissolve the coating material, so as to remove curing agent from the surface of the coating material. This process is described in WO 96/09883 published 4 April 1996, see page 2 lines 26 to 30 and page 4 lines 5 to 23. In one preferred embodiment, solidified particles of coating material interspersed with curing agent, are collected and contacted with a solvent that dissolves the curing agent, but does not dissolve the coating material, which solvent is described in WO 96/09883 published 4 April 1996 at page 4 lines 23 to 35.

The concentration of curing agent in the particles is preferably 1 weight percent, or greater, more preferably 20 weight percent or greater and most preferably 25 weight percent or greater. The concentration of curing agent in the particles is preferably 70 weight percent or less, more preferably 65 weight percent or less, even more preferably to 50 weight percent or less, and most preferably to 45 weight percent or less based on the total weight of curing agent and coating material.

The polyurethane prepolymers are present in the adhesive composition in an amount sufficient such that when the resulting adhesive cures substrates are bound together. Preferably the lap shear strengths of bonds so formed is 30 psi (206 kPa) or greater after 60 minutes and more preferably after 30 minutes. Preferably the polyurethane prepolymers are present in an amount of 55 parts by weight of the adhesive composition or greater, more preferably 60 parts by weight or greater and most preferably 69 parts by weight or greater. Preferably the polyurethane prepolymers are present in an amount of 80 parts by weight of the adhesive composition or less, more preferably 75 parts by weight or less and even more preferably 70 parts by weight or less.

The particles containing curing agents are present in the adhesive composition in sufficient amount to achieve the desired open time. Preferably the adhesive composition contains the particles in an amount of 0.1 percent by weight or greater based on the weight of the adhesive composition, more preferably 0.3 percent by weight or greater and most preferably 0.7 percent by weight or greater. Preferably the adhesive composition contains the particles in an amount of 10 percent by weight or less based on the weight of the composition, more preferably 5.0 percent by weight or less and most preferably 2.0 percent by weight or less.

The adhesive of the invention may be formulated with fillers and additives known in the prior art for use in adhesive compositions. By the addition of such materials, physical properties such as viscosity flow rates can be modified. However, to prevent premature hydrolysis of the moisture sensitive groups of the polyurethane prepolymer, fillers should be thoroughly dried before admixture therewith.

Optional components of the adhesive of the invention include reinforcing fillers. Such fillers are well-known to those skilled in the art and include carbon black, titanium dioxide, calcium carbonate, surface treated silicas, titanium oxide, fumed silica, and talc. Preferred reinforcing fillers comprise carbon black. In one embodiment, more than one reinforcing filler may be used, of which one is carbon black, and a sufficient amount of carbon black is used to provide the desired black color to the adhesive. The reinforcing fillers are used in sufficient amount to increase the strength of the adhesive and to provide thixotropic properties to the adhesive. Preferably the reinforcing filler is present in an amount of 1 part by weight of the adhesive composition or greater, more preferably 15 parts by weight or greater and most preferably 17 parts by weight or greater. Preferably the reinforcing filler is present in an amount of 40 parts by weight of the adhesive composition or less, more preferably 25 parts by weight or less and most preferably 23 parts by weight or less.

Among optional materials in the adhesive composition are clays. Preferred clays useful in the invention include kaolin, surface treated kaolin, calcined kaolin, aluminum silicates and surface treated anhydrous aluminum silicates. The clays can be used in any form which facilitates formulation of a pumpable adhesive. Preferably the clay is in the form of pulverized powder, spray dried beads or finely ground particles. Clays may be used in an amount of 0 parts by weight of the adhesive composition or greater, more preferably 1 part by weight or greater and even more preferably 6 parts by weight or greater. Preferably the clays are used in an amount of 20 parts by weight or less of the adhesive composition and more preferably 10 parts by weight or less.

The adhesive composition of the invention may further comprise one or more catalysts known for promoting the cure of polyurethanes in the presence of moisture. Preferable catalysts include metal salts such as tin carboxylates, organo silicon titanates, alkyl titanates, bismuth carboxylates, and dimorpholinodiethyl ether or alkyl-substituted dimorpholinodiethyl ethers. Among preferred catalysts are bismuth octoate, dimorpholinodiethyl ether and (di-(2-(3,5-dimethylmorpholino)ethyl)) ether. Such catalysts, when employed are preferably employed in an amount based on the weight of the adhesive composition of 0 parts by weight or greater, more preferably 0.1 parts by weight or greater, even more preferably 0.2 parts by weight or greater and most preferably 0.4 parts by weight or greater. Such catalysts are preferably employed in an amount, based on the weight of the adhesive composition, of 5 parts by weight or less, more preferably 1.75 parts by weight or less, even more preferably 1 part by weight or less and most preferably 0.6 parts by weight or less.

The adhesive composition of this invention may further comprise plasticizers so as to modify the rheological properties to a desired consistency. Such materials should be free of water, inert to isocyanate groups and compatible with a polymer. Suitable plasticizers are well known in the art and preferable plasticizers include alkyl phthalates such as dioctylphthalate or dibutylphthalate, partially hydrogenated terpene commercially available as "HB-40", trioctyl phosphate, epoxy plasticizers, toluene-sulfamide, chloroparaffins, adipic acid esters, castor oil, toluene and alkyl naphthalenes. The amount of plasticizer in the adhesive composition is that amount which gives the desired rheological properties and which is sufficient to disperse the catalyst in the system. The amounts disclosed herein include those amounts added during preparation of the prepolymer and during compounding of the adhesive. Preferably plasticizers are used in the adhesive composition in an amount of 0 parts by weight or greater based on the weight of the adhesive composition, more preferably 5 parts by weight or greater and most preferably 10 parts by weight or greater. The plasticizer is preferably used in an amount of 45 parts by weight or less based on the total amount of the adhesive composition and more preferably 40 parts by weight or less.

The adhesive of this invention may further comprise stabilizers which function to protect the adhesive composition from moisture, thereby inhibiting advancement and preventing premature crosslinking of the isocyanates in the adhesive formulation. Included among such stabilizers are diethylmalonate and alkylphenol alkylates. Such stabilizers are preferably used in an amount of 0.1 parts by weight or greater based on the total weight of the adhesive composition, preferably 0.5 parts by weight or greater and more preferably 0.8 parts by weight or greater. Such stabilizers are used in an amount of 5.0 parts by weight or less based on the weight of the adhesive composition, more preferably 2.0 parts by weight or less and most preferably 1.4 parts by weight or less.

Optionally, the adhesive composition may further comprise a thixotrope. Such thixotropes are well-known to those skilled in the art and include alumina, limestone, talc, zinc oxides, sulfur oxides, calcium carbonate, perlite, slate flour, salt (NaCl),and cyclodextrin. The thixotrope may be added to the adhesive of the composition in a sufficient amount to give the desired rheological properties. Preferably the thixotrope is present in an amount of 0 parts by weight or greater based on the weight of the adhesive composition, preferably 1 part by weight or greater. Preferably the optional thixotrope is present in an amount of 10 parts by weight or less based on the weight of the adhesive composition and more preferably 2 parts by weight or less.

The adhesive composition may further comprise one or more polyisocyanates. The polyisocyanates which may be present are those described hereinbefore.

Other components commonly used in adhesive compositions may be used in the adhesive composition of this invention. Such materials are well-known to those skilled in the art and may include ultraviolet stabilizers and antioxidants.

As used herein, all parts by weight relative to the components of the adhesive composition are based on 100 total parts by weight of the adhesive composition.

The adhesive composition of this invention may be formulated by blending the components together using means well-known in the art. Generally the components are blended in a suitable mixer. Such blending is preferably conducted in an inert atmosphere in the absence of oxygen and atmospheric moisture to prevent premature reaction. It may be advantageous to add any plasticizers to the reaction mixture for preparing the isocyanate containing prepolymer so that such mixture may be easily mixed and handled. Alternatively, the plasticizers can be added during blending of all the components. Once the adhesive composition is formulated, it is packaged in a suitable container such that it is protected from atmospheric moisture and oxygen. Contact with atmospheric moisture and oxygen could result in premature crosslinking of the polyurethane prepolymer-containing isocyanate groups.

The encapsulated curing agent particles can be blended or mixed into the adhesive formulation using different processes at different stages of production. The encapsulated curing agent particles can be blended into the prepolymer after it has been synthesized. This prepolymer, with the blended encapsulated curing agent particles, is then used for compounding into the adhesive. The encapsulated curing agent particles can also be blended into the adhesive directly after the compounding stage. Once the mixing and wetting cycle of the fillers is complete within the mixing or blending apparatus, the encapsulated curing agent particles are added so as to achieve a good dispersion. The encapsulated curing agent particles can be coextruded either dry or in a slurry with the prepolymer directly into the package during the filling and packaging stage.

The adhesive composition of the invention is used to bond porous and nonporous substrates together. The adhesive composition is applied to a substrate and the adhesive on the first substrate is thereafter contacted with a second substrate. In preferred embodiments, the surfaces to which the adhesive is applied are cleaned and primed prior to application, see for example U.S. Patents 4,525,511, 3,707,521 and 3,779,794. Generally the adhesives of the invention are applied at ambient temperature in the presence of atmospheric moisture. Exposure to atmospheric moisture is sufficient to result in curing of the adhesive. Curing is accelerated by the addition of the encapsulated curing agent particles. Curing may be further accelerated by applying heat to the curing adhesive by means of convection heat, or microwave heating. Preferably the adhesive of the invention is formulated to provide a working time of 6 minutes or greater more preferably 10 minutes or greater. Preferably the working time is 15 minutes or less and more preferably 12 minutes or less.

In the embodiment where the encapsulated curing agents are used, during the application of the adhesive of the invention, the particles are ruptured to release the curing agent so that it may accelerate the cure of the adhesive. This rupturing of the particles may be performed by the application of heat, shear forces, ultrasonic waves or microwaves during application of the adhesive. In many embodiments the dispensing apparatus has incorporated the necessary apparatus to rupture the particles. The dispensing apparatus can incorporate a heating element, a means of shearing the particles, or applying ultrasonic or microwaves. In a preferred embodiment the adhesive is forced through a screen which is at its smallest point smaller than the smallest particles. In such embodiment it is preferable if the screen has long slits which have larger openings facing the adhesive to be extruded and smaller openings facing the dispensing nozzle wherein the smallest opening is smaller than the smallest particles and the larger opening is larger than the largest particle. This design reduces the pressure drop which results from driving the adhesive containing the particles through the screen.

The adhesive composition is preferably used to bond glass to other substrates such as metal or plastics. In a preferred embodiment the first substrate is a glass window and the second substrate is a window frame. In another preferred embodiment the first substrate is a glass window and the second substrate is a window frame of an automobile.

Preferably the adhesive compositions of the invention demonstrate a lap shear strength after 60 minutes from application to substrates of 30 psi (206 kPa) or greater, more preferably 60 psi (412 kPa) or greater and most preferably 80 psi (548 kPa) or greater. Lap shears are determined according to ASTM D-3163. Preferably the cured adhesive compositions of the invention demonstrate an elongation of 200 percent or greater as determined according to ASTM D-638-91, more preferably 300 percent or greater and preferably greater than 600 percent. Preferably the elongation is 700 percent or less.

Viscosities as described herein are determined according to the procedure disclosed in WO 96/21688 published 18 July 1996 at page 12 lines 24 to 30.

Molecular weights as described herein weight average molecular weights and are determined according to the procedure disclosed in WO 96/21688 published 18 July 1996 at page 12 lines 31 to page 13 line 2.

In reference to polyurethane prepolymers, average isocyanate functionality is determined according to the procedure and formula disclosed in WO 96/21688 published 18 July 1996 at page 13 lines 3 to 17.

The following examples are provided to illustrate the invention, but are not intended to limit the scope thereof. All parts and percentages are by weight unless otherwise indicated.

### Preparation of Prepolymer Examples 1-6

A polyether polyurethane prepolymer with a low degree of branching was prepared by mixing 545.52 g of a polyoxypropylene diol having an average molecular weight of 2000 commercially available from PPG under the trade name "PPG® 2025" with 790.56 g of a polyoxypropylene triol having an average molecular weight of 4500 and commercially available from Olin Chemical under the trade name "POLY G® 85-36". Mixing was carried out in a reactor while heating the mixture to 55°C. 240.9 g of diphenylmethane-4,4'-diisocyanate and 0.25 g of stannous octoate were added to the mixture. The mixture was reacted for one hour. 788.16 g of a plasticizing agent, dialkyl phthalate, was added to the mixture and the mixing was continued for one hour.

### Preparation of Adhesive Compositions Examples 1-6

Adhesive compositions were prepared by placing the prepolymer previously prepared in a planetary mixer, degassing the mixture for 20 minutes. Carbon black and clay were added to the mixer and mixing was continued for 20 minutes under vacuum. Dimorpholinodiethyl ether (DMDEE) was added as catalyst to the mixture and it was mixed for another 20 minutes. Encapsulated curing agents were randomly dispersed within the adhesive composition. The adhesive composition was packaged in tubes.. The components, and the amounts of the components, of the adhesive compositions prepared are compiled in Table I. In Example 1, no encapsulated curing agent was used. In Examples 2 and 3, the encapsulated curing agent was water in an amount of 50 percent by weight encapsulated in a mixture of 45 weight percent Boler™ 1426 paraffin wax, 45 weight percent Piccolyte 5-115 hydrocarbon resin and 10 weight percent Epolene C-16 polyethylene. In Examples 4 to 6 the encapsulated curing agent was a 50:50 mixture of diethylene glycol and a urethane bisoxazolidine (Hardener OZ available from BASF) present in a total amount of 35 percent by weight in the encapsulated curing agent particles wherein the coating material was as described before.

**Table I**

| Adhesive Compositions Example | 1* (g) | 2 (g) | 3 (g) | 4 (g) | 5 (g) | 6 (g) |
|---|---|---|---|---|---|---|
| Prepolymer | 648.38 | 648.38 | 324.19 | 778.05 | 648.38 | 713.21 |
| Carbon Black | 255.96 | 255.96 | 127.98 | 307.15 | 255.96 | 281.55 |
| Clay | 72 | 72 | 36 | 86.4 | 72 | 79.2 |
| Dimorpholino diethyl ether | 2.28 | 2.28 | 1.14 | 2.73 | 2.28 | 2.5 |
| Encapsulated curing agent | 0 | 55 | 55 | 66 | 110 | 242 |

| | | | | | | |
|---|---|---|---|---|---|---|
| *Comparative Example | | | | | | |

The adhesives tested for working time and skinning time according to the methods described below and lap shear strengths according to ASTM D-3163. Skinning time was determined by the following procedure. An adhesive bead of 1/4 inch x 1/4 inch (6.35 x 6.35 mm) was dispensed on release paper. Every two minutes, a tongue depressor was lightly pressed on the surface of the bead. The earliest time which there is no adhesive residue on the tongue depressor after pressing it was recorded as the skinning time. To measure working time, a bead on release paper as described before, was depressed to one half its size with a tongue depressor every minute. The time after deposit when the bead no longer smears by pressure of the tongue depressor is the upper limit on working time. The results are compiled in Table II.

**Table II**

| | 1* | 2 | 3 | 4 | 5 | 6 |
|---|---|---|---|---|---|---|
| Wt. % of encapsulated curing agent | 0 | 0.5 | 1.0 | 0.5 | 1.0 | 2.0 |
| Wt. % of curing agent in the encapsulated particles | 0 | 50 | 50 | 35 | 35 | 35 |
| Working time (minutes) | 20 | 8 | 5 | 13 | 9 | 5 |
| Skinning Time | 15 | 6 | 4 | 8 | 6 | 2 |
| Lap Shear Strength 30 minutes osi | 9 | | | | | |
| | (61.7) | 20 (137) | 11.31 (212) | 18 (1.23) | 20 (137) | 26 (178) |
| 60 minutes psi (kPa) | 19 | 41 | 52 | 47 | 61 | 70 |
| | (130) | (281) | (356) | (322) | (418) | (480) |
| 90 minutes psi (kPa) | 28 | 52 | 71 | 81 | 108 | 131 |
| | (192) | (356) | (486) | (555) | (740) | (897) |

| | | | | | | |
|---|---|---|---|---|---|---|
| *Comparative Example | | | | | | |

### Preparation of Prepolymer - Examples 7 to 10

A polyether polyurethane prepolymer was prepared by mixing 651.5 g of a polyoxypropylene diol having an average molecular weight of 2,000 with 947.2 g of a polyoxypropylene triol having an average molecular weight of 4,500 and 480 g of a styrene acrylonitrile dispersed.polyoxypropylene triol with an average molecular weight of 5,400. Mixing was carried out in a reactor by heating the mixture to 48°C. 320 g of diphenylmethane-4,4'-diisocyanate and 0.17 g of stannous octoate was added to the mixture. The whole mixture was then reacted for one hour. Finally, 800 g of a plasticizing agent dialkyl phthalate was added to the mixture and the mixing was continued for one hour.

### Preparation of Adhesive Composition Examples 7 - 10

An adhesive composition was prepared using 1127 g of prepolymer of this example in a planetary mixer, degassed for 20 minutes 376 g of carbon black and 96 g of clay was added to the mixer and mixed for 20 minutes under vacuum. Finally 8 g of dimorpholinodiethyl ether (DMDEE) and 4 g of bismuth octoate (BiO) was added as catalyst to the mixture and mixed for another 20 minutes and packaged in tubes.

Additional polyurethane prepolymers and adhesive compositions were prepared as described above using the components and amounts described in Table III.

**Table III**

| Prepolymer Components/Example | 7 (g) | 8 (g) | 9 (g) | 10* (g) |
|---|---|---|---|---|
| Polyoxypropylene¹ diol | 651/5 | 320 | 640 | 363.68⁴ |
| Polyoxypropylene² triol | 947.2 | 384 | 768 | 527.05⁵ |
| SAN-dispersed in polyoxypropylenetriol³ | 480 | 288 | 576 | 0 |
| Diphenylmethane-4,4'-diisocyanate | 320 | 176 | 320 | 160.0 |
| Stannous Octoate | 0.17 | 0.08 | 0.17 | 0.17 |
| Dialkyl phthalate | 800 | 432 | 896 | 525.44 |
| Adhesive composition | | | | |
| Prepolymer | 1127 | 564 | 1127 | 270.16 |
| Carbon Black | 376 | 188 | 376 | 136.65 |
| Clay | 96 | 48 | 96 | |
| Dimorpholinodiethyl ether | 8 | 8 | 8 | 0.95 |
| Bismuth octoate | 4 | 4 | 4 | |
| Plasticizer | | 8 | 8 | |

| | | | | |
|---|---|---|---|---|
| *Comparative Example | | | | |
| ¹2000 molecular weight - available from Olin Chemical under trade name Poly G® 55-56 | | | | |
| ²4500 molecular weight - available from BASF under trade name TPE 4542 | | | | |
| ³5400 molecular weight - available from BASF under the trade name 994 LV | | | | |
| ⁴Polyoxypropylene diol having a MW of 2000 available from PPG under the trade name PPG 2025 | | | | |
| ⁵Polyoxypropylene triol having a molecular weight of 4500 available from Olin Chemical under the trade name Poly G 85-36 | | | | |

In Example 10 the reaction mixture was heated to 55°C before addition of polyisocyanate and catalyst.

The adhesives of Examples 7 to 10 are tested for skinning time and lap shear strengths as described hereinbefore. The results are compiled in Table IV.

**Table IV**

| Adhesive | Example 7 | Example 8 | Example 9 | Example 10* |
|---|---|---|---|---|
| % B.O. | 0.23 | 0.23 | 0.47 | 0.00 |
| % DMDEE | 0.47 | 0.47 | 0.47 | 0.3 |
| % Plasticizer | 0.47 | 0.47 | 0.00 | 0.00 |
| Working time | 10.5 | 13 | 10 | 20 |
| Lap Shear Strength 30 minutes psi (kPa) | 12 | 17.3 | 11 | 2.5 |
| | (82.2) | (119) | (75.4) | (17.1) |
| 60 minutes psi (kPa) | 32.5 | 37.3 | 40 | 15 |
| | (223) | (256) | (274) | (102) |
| 90 minutes psi (kPa) | 91.5 | 78.3 | 85.7 | 40 |
| | (627) | (536) | (587) | (274) |

| | | | | |
|---|---|---|---|---|
| *Comparative Example | | | | |

A comparison of Examples 7 and 10 demonstrate that the use of a styrene-acrylonitrile copolymer dispersed in a triol when compared to a triol without the copolymer, results in a lower skinning time and higher lap shear strengths at 30, 60 and 90 minutes.

### Example 11

### Preparation of pre-polymer:

A polyether polyurethane prepolymer was prepared by mixing 609.6 g of a polyoxypropylene diol having an average molecular weight of 2000 with 862.5 g of a polyoxypropylene triol having an average molecular weight of 4500 and 435 g of a styrene acrylonitrile dispersed polyoxypropylene triol with an average molecular weight of 5400. Mixing was carried out in a reactor by heating the mixture to 48°C. 315 g of diphenylmethane-4,4' - diisocyanate and 0.15 g of stannous octoate was added to the mixture. The whole mixture was then reacted for one hour. Finally, 735.6 g of a plasticizing agent dialkyl phthalate was added to the mixture and the mixing was continued for one hour.

### Preparation of Adhesive Composition:

An adhesive composition was prepared using 2432.5 g of prepolymer of the above formulation in a planetary mixer and degassed for 20 minutes under vacuum. 815.5 g of carbon black and 210 g of clay was added to the mixer and mixed for 30 minutes under vacuum. Finally 17.5 g of dimorpholindiethyl ether (DMDEE) and 7 g of bismuth octoate (BiO) was added as catalyst to the mixture and mixed for another 20 minutes.

An adhesive composition with an encapsulated curing agent was prepared using 498 g of the adhesive stated in above example mixed with 2 g of the encapsulated curing agent. The curing agent has a composition of 20% diethylene glycol and 80 % bisoxazolidine (Hardener OZ). The encapsulated curing agent has a curing agent loading of 31% and shell material of 69% with average size distribution between 1000 - 2000 microns. The shell material is the same shell material as used in Examples 1 to 6.

### Performance properties of above adhesive:

| | |
|---|---|
| Working time | 12 minutes |
| Skinning time | 8 minutes |
| Lap Shear Strength | |
| 30 minutes | 24 psi (165 kPa) |
| 60 minutes | 80 psi (551 kPa) |
| 90 minutes | 107 psi (737 kPa) |

## Claims

1. A one part adhesive composition comprising:
A) an isocyanate functional prepolymer having a free isocyanate content of from 0.8 to 2.2 by weight and a viscosity of from 3,000 centipoise (3.0 Pascal-seconds) to 20,000 centipoise (20 Pascal seconds) wherein the prepolymer comprises;
i) one or more polyisocyanates
ii) from 10 to 30 percent by weight, based on the weight of the prepolymer of a diol; from 15 to 40 percent by weight, based on the weight of the prepolymer of a triol; and from 9 to 18 percent by weight based on the weight of the prepolymer of a dispersion triol containing from 10 to 60 percent by weight based on the weight of the dispersion of organic polymer particles having a particle size of from 10 to 50 microns wherein the triol has a molecular weight of 4,000 to 8,000 and a hydroxyl number of from 15 to 75;
B) a catalyst capable of the reaction of isocyanate moieties with isocyanate reactive moieties;
C) optionally, one or more polyisocyanate.

2. A one-part adhesive according to Claim 1 wherein the catalyst comprises a mixture of a bismuth carboxylate and one of a dimorpholine diethyl ether or an alkyl substituted dimorpholino dialkyl ether.

3. A one-part adhesive according to Claim 1 or 2 wherein the adhesive further comprises a curing agent for an isocyanate functional prepolymer encapsulated within a coating material.

4. A one-part adhesive according to any one of the Claims 1 to 3 wherein the curing agent is a polyol, water, a latent cross-linking agent containing an oxazolidine moiety, or a mixture thereof.

5. The adhesive of Claim 3 or 4 wherein the coating material is a petroleum-derived alkane hydrocarbon wax, a polyethylene wax, a polyethylene alkene copolymer, an oxidized hydrocarbon wax containing hydroxyl or carboxyl groups, a polyester, a polyamide, or a combination thereof.

6. The adhesive of anyone of Claims 1 to 5 wherein the catalyst comprises a mixture of bismuth octoate and dimorpholino diethyl ether.

7. A one-part adhesive depending from anyone of Claims 1 to 6 comprising
1) from 55 to 80 parts by weight of prepolymer;
2) from 15 to 40 parts by weight of a reinforcing filler;
3) from 1 to 20 parts by weight of clay;
4) from 0.1 to 5.0 parts by weight of a catalyst;
5) from 5 to 45 parts by weight of plasticizer; and
6) from 0.1 to 10 parts by weight of encapsulated curing agent particles; wherein the adhesive contains 100 parts.

8. A method of bonding two substrates together comprising contacting an adhesive according to anyone of Claims 1 to 7 with at least one of the substrates and contacting the substrates together with the adhesive composition disposed between the substrates and allowing the adhesive to cure and bond the substrates together.

9. The method of Claim 8 wherein the adhesive contains curing agents encapsulated in a coating material which method further comprises breaking the capsules of curing agent so as to contact the curing agent with the prepolymer.

10. The method of Claim 8 or 9 wherein the adhesive exhibits a lap-shear strength according to ASTM D-3163 of 30 psi (206 kPa) or greater after 60 minutes and the adhesive demonstrates a working time of from 6 to 15 minutes.

## Patentansprüche

1. Einkomponentenklebstoffzusammensetzung, umfassend:
A) ein isocyanatfunktionelles Prepolymeres, das einen Gehalt an freiem Isocyanat von 0,8 bis 2,2 Gew.-% und eine Viskosität von 3.000 Centipoise (3,0 Pascal-Sekunden) bis 20.000 Centipoise (20 Pascal-Sekunden) hat, worin das Prepolymere umfaßt:
i) ein oder mehrere Polyisocyanate;
ii) von 10 bis 30 Gew.-%, bezogen auf das Gewicht des Prepolymeren, eines Diols; von 15 bis 40 Gew.-%, bezogen auf das Gewicht des Prepolymeren, eines Triols; und von 9 bis 18 Gew.-%, bezogen auf das Gewicht des Prepolymeren, eines Dispersionstriols, enthaltend von 10 bis 60 Gew.-%, bezogen auf das Gewicht der Dispersion, von organischen Polymerteilchen, die eine Teilchengröße von 10 bis 50 Mikron (µm) haben, worin das Triol ein Molekulargewicht von 4.000 bis 8.000 und eine Hydroxylzahl von 15 bis 75 hat;
B) einen Katalysator, der für die Reaktion von Isocyanateinheiten mit isocyanatreaktiven Einheiten fähig ist;
C) wahlweise ein oder mehrere Polyisocyanate.

2. Einkomponentenklebstoff nach Anspruch 1, bei welchem der Katalysator eine Mischung von einem Wismutcarboxylat und einem Dimorpholindiethylether oder einem alkylsubstituierten Dimorpholinodialkylether umfaßt.

3. Einkomponentenklebstoff nach Anspruch 1 oder 2, bei welchem der Klebstoff weiter einen Härter für ein isocyanatfunktionelles Prepolymeres, das innerhalb eines Überzugsmaterials eingekapselt ist, umfaßt.

4. Einkomponentenklebstoff nach einem der Ansprüche 1 bis 3, bei welchem der Härter ein Polyol, Wasser, ein latentes Vernetzungsmittel, das ein Oxazolidineinheit enthält, oder eine Mischung hiervon ist.

5. Klebstoff nach Anspruch 3 oder 4, bei welchem das Überzugsmaterial ein von Petroleum abstammendes Alkan-Kohlenwasserstoffwachs, ein Polyethylenwachs, ein Polyethylen-Alkencopolymeres, ein oxidiertes Kohlenwasserstoffwachs, das Hydroxyloder Carboxylgruppen enthält, ein Polyester, ein Polyamid oder ein Kombination hiervon ist.

6. Klebstoff nach irgendeinem der Ansprüche 1 bis 5, bei welchem der Katalysator eine Mischung von Wismutoctoat und Dimorpholinodiethylether umfaßt.

7. Einkomponentenklebstoff, abhängig von irgendeinem der Ansprüche 1 bis 6, umfassend:
1) von 55 bis 80 Gew.-Teile von Prepolymerem;
2) von 15 bis 40 Gew.-Teile eines verstärkenden Füllers;
3) von 1 bis 20 Gew.-Teile Ton;
4) von 0,1 bis 5,0 Gew.-Teile eines Katalysators;
5) von 5 bis 45 Gew.-Teile Weichmacher;
6) von 0,1 bis 10 Gew.-Teile von eingekapselten Härterteilchen;
wobei der Klebstoff 100 Teile enthält.

8. Verfahren zum Verkleben zweier Substrate miteinander, umfassend das Inkontaktbringen eines Klebstoffes entsprechend irgendeinem der Ansprüche 1 bis 7 mit wenigstens einem der Substrate und Inkontaktbringen der Substrate miteinander, wobei die Klebstoffzusammensetzung zwischen den Substraten angeordnet ist, und Ermöglichen des Klebstoffes zum Aushärten und Verkleben der Substrate miteinander.

9. Verfahren nach Anspruch 8, bei welchem der Klebstoff Härter enthält, die in einem Überzugsmaterial eingekapselt sind, wobei das Verfahren weiter das Zerbrechen der Kapseln des Härters umfaßt, so daß der Härter mit dem Prepolymeren in Kontakt kommt.

10. Verfahren nach Anspruch 8 oder 9, bei welchem der Klebstoff eine Überlappungs-Scherfestigkeit entsprechend ASTM D-3163 von 30 psi (206 kPa) oder größer nach 60 Minuten aufweist, und der Klebstoff eine Verarbeitungsszeit von 6 bis 15 Minuten zeigt.

## Revendications

1. Composition adhésive en une seule partie, qui comprend :
A) un prépolymère à groupes fonctionnels isocyanate, ayant une teneur en isocyanate libre de 0,8 à 2,2 % en poids et une viscosité de 3 000 centipoises (3,0 pascal-seconde) à 20 000 centipoises (20 pascal-seconde), ledit prépolymère comprenant :
i) un ou plusieurs polyisocyanates,
ii) 10 à 30 % en poids, par rapport au poids du prépolymère, d'un diol, 15 à 40 % en poids par rapport au poids du prépolymère, d'un triol, et 9 à 18 % en poids, par rapport au poids du prépolymère, d'une dispersion dans un triol contenant 10 à 60 % en poids, par rapport au poids de la dispersion, de particules de polymère organique ayant une taille de particule de 10 à 50 µm, ledit triol ayant une masse moléculaire de 4 000 à 8 000 et un indice d'hydroxyle de 15 à 75,
B) un catalyseur capable de faire réagir des fragments isocyanate avec des fragments aptes à réagir avec un isocyanate,
C) éventuellement un ou plusieurs polyisocyanates.

2. Adhésif en une seule partie selon la revendication 1, dont la catalyseur comprend un mélange d'un carboxylate de bismuth et d'oxyde de di(morpholinoéthyle) ou d'un oxyde de di(morpholinoéthyle) substitué par un ou des groupes alkyle.

3. Adhésif en une seule partie selon la revendication 1 ou 2, qui comprend en outre un durcisseur pour prépolymère à groupes fonctionnels isocyanate, enrobé d'une matière de revêtement.

4. Adhésif en une seule partie selon l'une quelconque des revendications 1 à 3, dont le durcisseur est un polyol, l'eau, un agent de réticulation latent contenant un fragment oxazolidine ou un mélange de ces produits.

5. Adhésif selon la revendication 3 ou 4, dans lequel la matière de revêtement est une cire d'un hydrocarbure de type alcane issu du pétrole, une cire de polyéthylène, un copolymère polyéthylène-alcène, une cire d'hydrocarbure oxydée contenant des groupes hydroxyle ou carboxyle, un polyester, un polyamide ou une combinaison de ces produits.

6. Adhésif selon l'une quelconque des revendications 1 à 5, dont le catalyseur comprend un mélange d'octoate de bismuth et d'oxyde de di(morpholinoéthyle).

7. Adhésif en une seule partie selon l'une quelconque des revendications 1 à 6, qui comprend :
1) 55 à 80 parties en poids de prépolymère,
2) 15 à 40 parties en poids d'une charge de renforcement,
3) 1 à 20 parties en poids d'argile,
4) 0,1 à 5,0 parties en poids d'un catalyseur,
5) 5 à 45 parties en poids d'un plastifiant, et
6) 0,1 à 10 parties en poids de particules de durcisseur enrobé,
l'adhésif représentant 100 parties en poids.

8. Procédé pour lier l'un à l'autre deux supports, qui comprend les étapes consistant à mettre en contact un adhésif selon l'une quelconque des revendications 1 à 7 avec au moins l'un des supports, à assembler les supports avec la composition adhésive disposée entre eux et à laisser l'adhésif durcir et lier l'un à l'autre les supports.

9. Procédé selon la revendication 8 dans lequel l'adhésif contient des durcisseurs enrobés d'une matière de revêtement, ledit procédé comprenant en outre la rupture des capsules de durcisseur de façon à mettre le durcisseur en contact avec le prépolymère.

10. Procédé selon la revendication 8 ou 9, dans lequel l'adhésif présente une résistance au cisaillement d'un joint à recouvrement, selon la norme ASTM D-3163, de 30 psi (206 kPa) ou plus après 60 minutes et l'adhésif présente un temps de prise de 6 à 15 minutes.
